(19) Europäisches Patentamt
European Patent Office
Office européen des brevets

(11) **EP 1 645 587 B1**

(12) **EUROPÄISCHE PATENTSCHRIFT**

(45) Veröffentlichungstag und Bekanntmachung des Hinweises auf die Patenterteilung:
**06.02.2008 Patentblatt 2008/06**

(51) Int Cl.:
*C08J 7/00* *(2006.01)*  *C08J 3/28* *(2006.01)*
*C09J 7/02* *(2006.01)*

(21) Anmeldenummer: **05108536.3**

(22) Anmeldetag: **16.09.2005**

(54) **Verfahren zur Vernetzung einer Klebemasse, die sich auf einem beidseitig mit antiadhäsiven Silikonschichten ausgerüsteten Träger befindet, mittels Elektronenstrahlen**

Process for electron beam cross-linking of an adhesive composition provided on a substrate having anti-adhesive silcon layers on both sides

Procédé pour la réticulation d'une composition adhésive dans un substrat ayant deux couches de silicone anti-adhésives au moyen de rayons d'électrons

(84) Benannte Vertragsstaaten:
**DE ES FR GB IT**

(30) Priorität: **06.10.2004 DE 102004048881**

(43) Veröffentlichungstag der Anmeldung:
**12.04.2006 Patentblatt 2006/15**

(73) Patentinhaber: **tesa AG**
**20253 Hamburg (DE)**

(72) Erfinder: **Neuhaus-Steinmetz, Hermann**
**22926, Ahrensburg (DE)**

(74) Vertreter: **Stubbe, Andreas**
**tesa AG,**
**Kst. 9500 - Bf. 645,**
**Quickbornstrasse 24**
**20253 Hamburg (DE)**

(56) Entgegenhaltungen:
**EP-A- 1 314 487**      **EP-A- 1 344 808**
**DE-A1- 10 014 563**   **DE-A1- 19 846 902**

EP 1 645 587 B1

**Beschreibung**

Die Erfindung betrifft Verfahren zur Vernetzung einer Klebemasse, die sich auf einem beidseitig mit antiadhäsiven Silikonschichten ausgerüsteten Träger befindet, mittels Elektronenstrahlen, wobei der Träger mit der Klebemasse in eine Bestrahlungsvorrichtung geführt wird, in der die Klebemasse einseitig mit Elektronenstrahlen von einem Elektronenstrahler beaufschlagt wird.

Die Strahlenvernetzung hat in der Verfahrenstechnik breite Anwendungsgebiete gefunden, so insbesondere bei der Vernetzung von Klebemassen, die dann auf Trägermaterialien wie Folien, Geweben oder Vliesen beschichtet werden können.

Beispielsweise ist bei Acrylathaftklebemassen zur Erzeugung herausragender Klebeigenschaften eine Vernetzung erforderlich. Auch bei Kautschuken wird hierdurch eine Verbesserung der Klebeigenschaften erreicht.

Bei der Herstellung von Klebebändern weist die Anwendung der strahlenchemischen Vernetzung durch UV-Strahlung oder Elektronenstrahlung (ES) besondere Vorteile gegenüber den chemisch/thermischen Vernetzungsverfahren auf.

Die Tiefenverteilung der absorbierten Strahlendosis in einem mit beschleunigten Elektronen bestrahlten Produkt ist für jede gegebene Beschleunigungsspannung bekannt. Von verschiedenen Autoren sind hierfür empirische Funktionen entwickelt worden (zum Beispiel Heger, beta-gamma 1, 20, 1990). Von Neuhaus-Steinmetz ist auf der RadTech Europe, Mediterraneo 1993, folgende empirische Funktion veröffentlicht worden:

$$D[\%] = \frac{\exp\left\{-\left(\frac{18{,}8*X}{(U_B)^{1{,}57}} - 0{,}7\right)^2\right\}}{1 + \left(\frac{9{,}7*X}{(U_B)^{1{,}57}}\right)^{15}}$$

mit

D     Dosis in %
$U_B$     Beschleunigungsspannung in kV
X     durchstrahltes Flächengewicht in g/m$^2$, bestehend aus Flächengewicht des Vakuumfensters, Luftspalt zwischen Vakuumfenster und Produkt und Tiefe im Produkt

Reicht aufgrund des hohen Flächengewichtes eines Produktes die maximale Beschleunigungsspannung der Elektronenstrahlanlage für eine genügend gleichmäßige Durchstrahlung nicht aus, so wird in der Literatur die Möglichkeit der Bestrahlung von beiden Seiten beschrieben, wobei für beide Seiten die gleiche Beschleunigungsspannung und Strahlendosis eingestellt werden.

Für Produkte, die aus einer zu vernetzenden Beschichtung, welche zum Beispiel ein Haftkleber sein kann, und einem strahlendegradierbaren Träger bestehen, wie zum Beispiel Papier, Zellulosegewebe oder -vlies oder orientierte PP-Folien (OPP-Folien), kann durch Optimierung der Beschleunigungsspannung die Schädigung minimiert werden. Hierbei erhält der Träger eine deutlich geringere mittlere Dosis als die Beschichtung, während der Dosisabfall in der Beschichtung noch in zulässigen Grenzen liegt.

Derartige Zusammenhänge sind unter anderem in der EP 0 453 254 B (Yarosso u.a.) sowie in der Vortragsmitschrift eines von Dr. Karmann auf dem 7. Münchener Klebstoffund Veredlungsseminar, 1982, gehaltenen Vortrags beschrieben.

Ein doppelseitiges Klebeband, bestehend aus einem Träger mit den zu vernetzenden Klebmassen auf beiden Seiten und einem antiadhäsiv ausgerüsteten Releaseliner, sollte bei einseitiger gleichmäßiger Durchstrahlung mit beschleunigten Elektronen insbesondere bei Acrylatklebebändern nur eine Dosis von maximal ca. 10 bis 50 kGy erhalten, anderenfalls muss der Releaseliner wegen der unzulässigen Schädigung der mechanischen und antiadhäsiven Eigenschaften ausgetauscht werden. Die maximal zulässige absorbierte Strahlendosis ist vom Typ des Haftklebers und der Releasebeschichtungen abhängig, wobei dickere Silikonreleaseschichten deutlich weniger strahlenempfindlich sind als dünnere.

Eine Minderung der unerwünschten Effekte ist bei geeigneten Schichtdicken durch eine geschickte Wahl der Beschleunigungsspannung zu erreichen, wenn die Strahlendosis im Releaseliner bereits deutlich abgefallen ist. Allerdings ist dabei zu beachten, dass die dem Releaseliner zugewandte Haftklebeschicht noch eine zur Vernetzung ausreichende Strahlendosis erhalten muss.

Bei der Bestrahlung beider Seiten eines doppelseitigen Klebebandes aus einem Träger mit Haftklebmassen auf beiden Seiten und einem antiadhäsiv ausgerüsteten Releaseliner erhält dieser die volle Strahlendosis. Das gilt auch für sogenannte Transfertapes, bei denen der zu vernetzende Haftkleber ohne weiteren Träger auf einen Releaseliner beschichtet wird.

Aus den obigen Ausführungen wird deutlich, dass der erforderliche Aufwand für die Vernetzung von doppelseitigen Klebebändern mit Elektronenstrahlen dann erheblich wird, wenn die zur Vernetzung der Haftklebeschicht benötigten Strahlendosen so hoch liegen, dass die mechanischen und antiadhäsiven Eigenschaften des Releaseliners unzulässig stark geschädigt werden, da dann der Releaseliner durch Umdecken gegen einen neuen unbelasteten ausgetauscht werden muss.

Bei einseitigen Klebebändern kann die Releaseschicht natürlich nicht ausgetauscht werden. Hier muss bei zu erwartender, zu starker Schädigung durch Elektronenstrahlen die Releasebeschichtung oder Releasenachbeschichtung erst nach der ES-Bestrahlung erfolgen. Dieses ist jedoch aufwendiger als die Releasebeschichtung vor der Beschichtung der Klebemasse.

Mit der DE 199 05 934 A1 ist ein Verfahren zur Herstellung einer Beschichtung von lösungsmittelfreien Haftklebesystemen auf insbesondere releasebeschichtete Substrate bekannt geworden, wobei

a) auf eine rotierende Walze das Haftklebesystem in einer oder mehreren Lagen mittels eines Klebstoffauftragswerks aufgebracht wird,

b) das auf der Walze befindliche Haftklebesystem in einer Bestrahlungsvorrichtung durch energiereiche Strahlung, und zwar mit Hilfe von Elektronenstrahlen (ES), UV-oder IR-Strahlen, vernetzt wird und

c) an die Walze das Substrat herangeführt wird, so dass das Haftklebesystem von der Walze auf das Substrat transferiert wird und gegebenenfalls aufgerollt wird.

Typische Bestrahlungsvorrichtungen, die bei der Ausgestaltung des Verfahrens zum Einsatz kommen, stellen Linearkathodensysteme, Scannersysteme beziehungsweise Multilängskathodensysteme dar, sofern es sich um Elektronenstrahlbeschleunigern handelt.

Die Beschleunigungsspannungen liegen im Bereich zwischen 40 kV und 350 kV, vorzugsweise 80 kV bis 300 kV. Die Dosisleistungen bewegen zwischen 5 bis 150 kGy, insbesondere 20 bis 90 kGy.

Das Heranführen des Substrats geschieht insbesondere über eine zweite Walze. Als Substrate finden Papiere, Folien, Non-Wovens und releasebeschichtete Materialien wie Trennpapiere, Folien und dergleichen Verwendung.

Die DE 198 46 901 A1 offenbart ein Verfahren zur strahlenchemischen Vernetzung von einseitig mit einer Klebmasse beschichteten Klebebändern, wobei die Bestrahlung des Klebebands durch das Trägermaterial des Klebebands auf die Klebmasse derartig erfolgt, dass das Trägermaterial und die dem Trägermaterial zugewandte Klebmasseseite eine Dosis von 30 bis 200 kGy, insbesondere 50 bis 150 kGy, ganz besonders 100 kGy, erhalten, und wobei die Beschleunigungsspannung während der Bestrahlung so gewählt wird, dass die Dosis auf der offenen Klebemasseseite auf 0 bis 60 kGy, insbesondere auf 0 bis 50 kGy, ganz besonders auf 10 bis 20 kGy, abgesunken ist.

Hierdurch wird erreicht, dass durch die hohe Vernetzung der Masseschicht auf der dem Träger zugewandten Seite kein Migrieren von Massebestandteile auf die offene Trägerseite stattfinden kann, während die Klebeeigenschaften des Bandes über die Vernetzung im Bereich der offenen Masseseite über die Elektronenstrahldosisabnahme mit der durchstrahlten Tiefe im Produkt eingestellt werden.

Die DE 198 46 902 A1 beschreibt ein Verfahren zur strahlenchemischen Vernetzung von doppelseitigen Klebebändern, wobei ein beidseitig mit Klebern beschichtetes Trägermaterial in einer Bestrahlungsvorrichtung von beiden Seiten mit unterschiedlichen Dosen asymmetrisch bestrahlt wird.

In einer der dort offenbarten bevorzugten Ausführungsformen besteht das Verfahren zur strahlenchemischen Vernetzung von doppelseitigen Klebebändern aus den Verfahrensschritten:

a) Beschichten eines Trägermaterials mit einem Kleber A,

b) ES-Vernetzung des Teilproduktes Kleber A/Träger auf der Masseseite mit einer an der ES-Anlage eingestellten Dosis A und Beschleunigungsspannung A,

c) Eindecken des Klebers A mit einem Releaseliner,

d) Beschichten der zweiten Seite des Trägermaterials mit dem Kleber B und

e) ES-Bestrahlung des Verbundes auf die offene Seite der Klebmasse B mit einer an der ES-Anlage eingestellten Dosis B und Beschleunigungsspannung B, wobei die Seite mit dem Releaseliner vorzugsweise auf einer Kühlwalze durch die Elektronenbestrahlung geführt wird und wobei die Dosis A und die Dosis B und/oder die Beschleunigungsspannung A und die Beschleunigungsspannung B unterschiedliche Werte aufweisen.

Es ist kein Austausch des Releaseliners und kein Umdeckvorgang notwendig. Die Verfahrensschritte können in einem Durchgang ausgeführt werden. Wenn es für erforderlich erachtet wird, kann auch eine inline-Vorbehandlung und eine zusätzliche Egalisierung des Trägers erfolgen, das heißt, eine Glättung des Trägers mittels Erwärmung aufgrund der schlechten Planlage des Trägers (Verspannungen beispielsweise).

Dazu wird zunächst im Falle der ES-Vernetzung die an der ES-Anlage einzustellende Beschleunigungsspannung und Dosis für die zweite Bestrahlung abhängig von den Einzeldicken der Verbundschichten, bei Gesamtdosen bis 80 kGy und mehr in den Masseschichten, vorzugsweise mit Hilfe eines Computerprogramms so berechnet, dass die

a) Dosis auf der offenen Seite des Releaseliners kleiner 40 kGy, vorzugsweise kleiner 10 kGy, bleibt,
b) Dosis in der Grenzschicht Releaseliner/Klebmasse A kleiner 50 kGy, vorzugsweise kleiner 15 kGy, bleibt,
c) Oberflächendosis in der Klebmasse B kleiner (Solldosis + 25 %), vorzugsweise kleiner (Solldosis + 15 %), bleibt und
d) Dosis in der Grenzschicht Träger/Klebmasse B größer (Solldosis - 25 %), vorzugsweise größer (Solldosis - 15 %), bleibt,
e) während andererseits der Dosisabfall in der Klebmasse B zum Träger hin 45 %, vorzugsweise 25 %, der Solldosis nicht übersteigt.

Mit der DE 101 57 881 A1 ist ein Verfahren zur Herstellung von bahnförmigen, zumindest zweischichtigen Produkten bekannt geworden, bei welchem eine aus einer Auftragsvorrichtung austretende Masse als Schicht unter Aufbringung elektrostatischer Ladungen auf ein bahnförmiges Substrat aufgetragen wird, welches auf einer Transportvorrichtung geführt wird, und bei welchem das mit der Masse beschichtete Substrat vor dem Verlassen der Transportvorrichtung elektrostatisch neutralisiert wird, wobei auf das bahnförmige Substrat vor der Beschichtung mittels einer Substratelektrode elektrostatische Ladungen aufgebracht werden, so dass das Substrat auf die Transportvorrichtung gedrückt wird.

Vorzugsweise kann zwischen der Auflegeelektrode und Entladungselektrode das auf der Transportvorrichtung befindliche Substrat mittels Bestrahlungsvorrichtung durch energiereiche Strahlung, und zwar mit Hilfe von Elektronenstrahlen (ES), UV- oder IR-Strahlen, vernetzt werden. Dies ist insbesondere dann vorteilhaft, wenn es sich bei dem Substrat um eine Klebemasse handelt.

Typische Bestrahlungsvorrichtungen, die bei der erfindungsgemäßen Ausgestaltung des Verfahrens zum Einsatz kommen, stellen Linearkathodensysteme, Scannersysteme beziehungsweise Multilängskathodensysteme dar, sofern es sich um Elektronenstrahlbeschleuniger handelt.

Die Beschleunigungsspannungen liegen vorzugsweise im Bereich zwischen 40 kV und 500 kV, insbesondere zwischen 80 kV und 300 kV. Die Dosisleistungen bewegen zwischen 5 bis 150 kGy, insbesondere 15 bis 90 kGy.

In der DE 100 14 563 A1 wird ein Verfahren zur Elektronenstrahlvernetzung von Haftklebesystemen auf insbesondere releasebeschichteten Substraten beschrieben, wobei

- auf eine rotierende Walze mittels eines Fluidauftragswerk ein Fluidfilm aufgetragen wird,
- auf den Fluidfilm das Material mit dem Releaseliner gelegt wird, so dass sich der Fluidfilm zwischen Walze und dem Releaseliner befindet, und
- das Material auf dem Fluidfilm durch den Elektronenstrahl gefahren wird.

Nicht erkannt wurde, dass bei diesem Verfahren die Schädigung der Releaseschicht bei höheren Bahngeschwindigkeiten drastisch zunimmt, denn bei höheren Bahngeschwindigkeiten wird Luft zwischen der Fluidschicht und der Releaseschicht beim Auflegen eingeschleppt. Als Folge wird die an diese Luftschicht grenzende Releaseschicht beim Durchgang durch den Elektronenstrahl geschädigt.

Die Schädigung der Silikonschichten des Releaseträgers durch die zur Vernetzung einer auf dem Releaseträger befindlichen Klebmasse erforderlichen Elektronenstrahlen ist ein schwerwiegendes Problem.

Zum einen muss die Dosis so hoch eingestellt werden, dass auch die Klebemasse direkt auf dem Träger vernetzt wird, zum anderen muss eine ernstzunehmende Schädigung ausbleiben, weil sonst die Releaseeigenschaften der Silikonschicht verloren gehen beziehungsweise beeinträchtigt werden.

Der Fachmann steht unter erheblichem Druck, Vernetzungsverfahren dahingehend weiterzuentwickeln, dass die Schädigung besagter Schichten verringert wird.

Aufgabe der Erfindung ist es, Verfahren zur Vernetzung einer Klebemasse, die sich auf einem beidseitig mit antiadhäsiven Silikonschichten ausgerüsteten Träger befindet, mittels Elektronenstrahlen zur Verfügung zu stellen. Dabei sollen

- keine Blasen unter dem Träger eingeschlossen werden,
- keine Eigenschaften des herzustellenden Produktes qualitätsbestimmend beeinträchtigt werden,
- keine Gefährdungen für das Bedienungspersonal entstehen und

- insbesondere keine beziehungsweise nur geringe Veränderungen der Eigenschaften der Silikonschichten des Trägers zu beobachten sein.

Gelöst wird diese Aufgabe durch Verfahren, wie sie im Hauptanspruch niedergelegt sind. Die Unteransprüche beschreiben vorteilhafte Ausführungsformen des Verfahrens.

Demgemäß betrifft die Erfindung ein Verfahren zur Vernetzung einer Klebemasse, die sich auf einem beidseitig mit antiadhäsiven Silikonschichten ausgerüsteten Träger befindet, mittels Elektronenstrahlen, wobei der Träger mit der Klebemasse in eine Bestrahlungsvorrichtung geführt wird, in der die Klebemasse einseitig mit Elektronenstrahlen von einem Elektronenstrahler auf der offenen, nicht eingedeckten Seite beaufschlagt wird, wobei der mit der Klebemasse beaufschlagte Träger in direktem Kontakt auf einer Walze liegend durch die Elektronenstrahlen geführt wird, wobei über der Aufgabelinie des Trägers mit der Klebemasse auf die Walze eine elektrostatische Aufladungsvorrichtung und über der Abzugslinie des Trägers mit der Klebemasse von der Walze eine elektrostatische Entladevorrichtung, insbesondere Elektrode, vorhanden ist.

Weiterhin umfasst die Erfindung ein Verfahren zur Vernetzung einer Klebemasse, die sich auf einem beidseitig mit antiadhäsiven Silikonschichten ausgerüsteten Träger befindet, mittels Elektronenstrahlen, wobei der Träger mit der Klebemasse in eine Bestrahlungsvorrichtung geführt wird, in der die Klebemasse einseitig mit Elektronenstrahlen von einem Elektronenstrahler auf der offenen, nicht eingedeckten Seite beaufschlagt wird, wobei der mit der Klebemasse beaufschlagte Träger in direktem Kontakt auf einer Walze liegend durch die Elektronenstrahlen geführt wird, wobei über der Aufgabelinie des Trägers mit der Klebemasse auf die Walze eine Luftdüse vorhanden ist.

Die über der Aufgabelinie befindliche elektrostatische Aufladungsvorrichtung oder die Luftdüse sorgen dafür, dass der Träger auf die Walze mit Hilfe von elektrischen Ladungen aus einer mit Hochspannung beaufschlagten Elektrode oder Luft gepresst werden, wodurch die Gasschicht zwischen dem Träger und der Walze weitgehend entfernt wird. Hierdurch wird eine Schädigung der der Walze zugewandten Silikonschicht des Trägers deutlich reduziert. Üblicherweise wird das zwischen Träger und Walze befindliche Gas (zumeist Luft) durch die auftreffenden Elektronen des Elektronenstrahlers ionisiert. Die Ionen greifen unter anderem die Silikonschicht auf dem Träger an, so dass die Funktionalität der Silikonschicht beeinträchtigt wird.

Durch weitgehenden Ausschluss der Luft/des Gases zwischen Träger und Walze können keine Ionen gebildet werden

Mit der Aufladungselektrode, die an Hochspannung angeschlossen ist, werden Ladungen auf den Kleber gebracht, wodurch durch elektrostatische Kräfte die Luft beziehungsweise das Umgebungsgas zwischen dem Träger und der Walze herausgepresst werden.

Vorzugsweise beträgt der Abstand zwischen Elektrode und der Walze zwischen 2 und 30 mm, insbesondere zwischen 3 und 15 mm.

Weiter vorzugsweise werden positive oder negative Hochspannungen zwischen 5 und 30 kV, insbesondere zwischen 7 und 22 kV, zum elektrostatischen Anpressen über einen Hochspannungsgenerator an die Aufladeelektrode angelegt.

Weiter vorzugsweise beträgt die Bahngeschwindigkeit, mit der der Träger samt Klebemasse in die Bestrahlungsvorrichtung geführt wird, über 100 m/min, insbesondere über 200 m/min.

In einer vorteilhaften Ausführungsform besteht die Walze aus einer elektrisch leitfähigen Walze und/oder ist als Kühlwalze ausgeführt.

In einer weiteren vorteilhaften Ausführungsform ist die Mantelseite der Walze mit einem elektrisch isolierenden Material beschichtet. Dicke und elektrische Durchschlagsfestigkeit der isolierenden Beschichtung sowie das Tiefenprofil der Strahlendosis werden vorteilhaft so gewählt, dass die Primärelektronen des Elektronenstrahls die Isolierung nicht überwinden können und zur Strahlerseite austreten müssen.

Weiter vorzugsweise wird auf die rotierende Walze mittels eines Fluidauftragswerks ein Fluidfilm aufgetragen, so dass zwischen der Walze und dem Träger sich das aufgetragene Fluid befindet.

In Kombination mit der Aufladungselektrode wird so die Luft beziehungsweise das Umgebungsgas zwischen dem Träger und dem Fluid auch bei höheren Bahngeschwindigkeiten herausgepresst, sogar bei Geschwindigkeiten über 200 m/min.

Als Walze dient gewöhnlich eine geerdete Metallwalze, die die auftreffenden Elektronen und die dabei entstehende Röntgenstrahlung absorbiert. Sie ist bevorzugt mit einem wirksamen Temperiersystem ausgerüstet, um eine Energieabfuhr, insbesondere in Form von Wärmeenergie, zu gewährleisten. Zur Verhinderung der Korrosion ist sie gewöhnlich mit einer Schutzschicht überzogen. Diese wird bevorzugt so ausgewählt, dass sie von dem Fluid gut benetzt wird. Im Allgemeinen ist die Oberfläche leitfähig. Es kann aber auch günstiger sein, sie mit einer oder mehreren Schichten aus isolierendem oder halbleitendem Material zu beschichten.

Vorteilhaft einzusetzende Walzen sind Stahlwalzen, insbesondere solche, welche eine Beschichtung zur Verbesserung der Korrosionsbeständigkeit und/oder der Benetzbarkeit tragen, wobei diese Beschichtungen bevorzugt aus geeigneten Metallen (beispielsweise Chrom), Metalloxiden oder aus Keramik sind.

Das Fluid wird vorteilhaft entweder auf die Rückseite des Trägers oder auf die Walze aufgetragen. Es ist aber auch möglich, dass es berührungslos aufgebracht wird, zum Beispiel durch Aufsprühen. Während der Elektronenbestrahlung befindet sich das Fluid zwischen der Walze und dem Träger.

Als Fluid wird ein Material verwendet, welches in der Lage ist, einen Kontakt zwischen dem Träger und der Walzenoberfläche herzustellen, insbesondere ein Material, welches die Hohlräume zwischen Trägermaterial und Walzenoberfläche (beispielsweise Unebenheiten in der Walzenoberfläche, Blasen) ausfüllt.

Hierfür bieten sich fließfähige Materialien an, welche in einem weiten Viskositätsbereich vorliegen können.

Als sehr vorteilhaft hat sich herausgestellt, als Fluid eine Flüssigkeit zu verwenden, die gegebenenfalls Additive für zusätzliche Funktionen enthält. Dazu gehören die Erhöhung der Benetzung und der elektrischen Leitfähigkeit sowie das Abfangen von Radikalen und anderen reaktiven Spezies, die von der absorbierten Strahlung erzeugt werden.

Als Fluid kann vorteilhaft Wasser eingesetzt werden, welches die erforderlichen Aufgaben der Erfindung zufrieden stellend erfüllt.

In einer weiteren Variante, welche hervorragend geeignet ist, werden dem Fluid Substanzen zugesetzt, die darin zumindest teilweise löslich sind. Für Wasser als Fluid bieten sich als Zusätze beispielsweise Alkylalkohole wie Ethanol, Propanol, Butanol, Hexanol an, ohne sich durch diese Beispiele in der Auswahl der Alkohole einschränken zu wollen. Weiterhin sehr vorteilhaft sind insbesondere längerkettige Alkohole, Glykole, Polyglykole, Ketone, Amine, Carboxylate, Sulfonate, wasserlösliche Cellulosederivate und dergleichen.

Eine Absenkung der Oberflächenspannung kann auch durch den Zusatz geringer Mengen an nichtionischen und/oder anionischen und/oder kationischen Tensiden erreicht werden. Im einfachsten Fall lassen sich hierzu kommerzielle Spülmittel oder Seifenlösungen verwenden, bevorzugt in einer Konzentration von einigen g/l in Wasser. Besonders geeignet sind spezielle Tenside, welche auch bei geringer Konzentration eingesetzt werden können. Hierfür seien beispielsweise Sulfoniumtenside (zum Beispiel β-Di(hydroxyalkyl)sulfoniumsalz), weiterhin beispielsweise ethoxylierte Nonylphenylsulfonsäureammoniumsalze. Hier sei insbesondere verwiesen auf den Stand der Technik unter "surfactants" in Ullmann's Encyclopedia of Industrial Chemistry, Sixth Edition, 2000 Electronic Release, Wiley-VCH, Weinheim 2000.

Als Fluid können die vorgenannten Flüssigkeiten auch ohne den Zusatz von Wasser jeweils für sich oder in Kombination miteinander eingesetzt werden.

Zur Verbesserung der Eigenschaften des Fluids (beispielsweise zur Erhöhung der Scherresistenz, Verringerung der Übertragung von Tensiden oder dergleichen auf die Lineroberfläche und damit verbesserte Reinigungsmöglichkeiten des Endproduktes) können dem Fluid und/oder den eingesetzten Zusatzstoffen weiterhin vorteilhaft Salze, Gele und ähnliche viskositätssteigernde Additive zugesetzt werden.

Für den Fall einer Flüssigkeit als Fluid kann man in hervorragender Weise vorgehen, wenn eine zweite Walze (Antragswalze), vorteilhaft mit einer benetzbaren oder saugfähigen Oberfläche, durch ein Bad mit dem Fluid läuft, dabei mit dem Kontaktmedium benetzt oder getränkt wird und durch Berührung mit der ersten Walze einen Film dieses Kontaktmediums aufträgt beziehungsweise aufstreicht. Auch andere Ausführungsformen des Auftragswerks sind realisierbar.

Als Träger können Folien wie PP oder PE-Folien sowie Papiere Verwendung finden.

Als Klebmassen werden insbesondere eingesetzt Acrylate und Kautschuke aus Lösung, aus Dispersion oder Hotmelt-Klebemassen, wobei diese zusätzlich noch gefüllt, gefärbt und/oder geschäumt sein können, also im Wesentlichen alle bekannten.

Die Klebemasse kann aus einer Klebemasse auf Basis von lösemittelhaltigen Naturkautschuk- und Acrylatklebemassen bestehen. Bevorzugt sind Klebemassen auf Basis von Acrylatdispersionen, besonders bevorzugt sind Klebemassen auf Basis von Styrol-Isopren-Styrol-Blockcopolymeren. Diese Klebemassentechnologien sind bekannt und werden in der Klebebandindustrie eingesetzt.

Die Herstellung der Klebebänder kann nach bekannten Verfahren erfolgen. Eine Übersicht über übliche Herstellungsverfahren findet sich beispielsweise in "Coating Equipment", Donatas Satas in Handbook of Pressure Sensitive Adhesive Technology, second edition, edited by Donatas Satas, Van Nostrand Reinhold New York pp. 767-808. Die bekannten Verfahren zum Trocknen und Schneiden der Klebebänder sind ebenfalls im Handbook of Pressure Sensitive Adhesive Technology, Seite 809-874 zu finden.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Der K-Wert wird dabei insbesondere bestimmt in Analogie zu DIN 53 726.

Zusätzlich werden dabei weitere leichtflüchtige Bestandteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, dass diese einen hohen K-Wert und damit ein hohes Molekulargewicht aufweisen. Dem Fachmann ist bekannt, dass sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer besonders bevorzugten Ausführungsform werden als Selbstklebemassen Copolymerisate aus (Meth) acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Weiterhin kann eine Klebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol (SIS)- und Styrol-Butadien-Styrol (SBS)-Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder andere hochenergetische elektromagnetische Wechselfelder erfolgen.

Die resultierenden Strahlendosen in den Klebemassen können vorzugsweise bis zu 80 kGy und mehr betragen, und ES-Beschleunigungsspannungen können von 40 bis 500 kV gewählt werden.

Das erfindungsgemäße Verfahren zeigt Vorteile, die derartig nicht vom Fachmann erwartet worden sind. Überraschender Weise führt die Beseitigung der eigentlich dünnen Schicht von Schleppluft zwischen dem Träger und der Walze, auf der der Träger durch den Elektronenstrahl gefahren wird, zu einer deutlichen Reduzierung der Schädigung der Releaseschicht durch den Elektronenstrahl, der für die Elektronenstrahlvernetzung erforderlich ist.

Die Verringerung der Schädigung der Silikonschicht liegt bei dem erfindungsgemäßen Verfahren bei 80 % bis 100 %.

Anhand der nachfolgend beschriebenen Figur wird eine besonders vorteilhafte Ausführung der Erfindung näher erläutert, ebenfalls ohne sich durch die Wahl der gezeigten Figur unnötig beschränken zu wollen.

Über eine Walze 1 wird ein Klebeband 2, bestehend aus einer beidseitig mit antiadhäsiven Silikonschichten ausgerüsteten Folie, auf die eine Klebemasse aufgebracht ist, der Walze 1 zugeführt, und zwar dergestalt, dass die Klebemasse einseitig mit Elektronenstrahlen von einem Elektronenstrahler 3 auf der offenen, nicht eingedeckten Seite beaufschlagt wird. Beim Auflegen auf die Walze 1 wird das Klebeband 2 zur Reduzierung der Schädigung der mit der Walze 1 in Kontakt stehenden Silikonschicht der Folie durch Aufbringen von elektrischen Ladungen mit einer Aufladungselektrode 4 gegen die Walze 1 gedrückt, wodurch Gas zwischen Walze 1 und Klebeband 2 herausgequetscht wird. Eine Entladeelektrode 5 befindet sich über der Abzugslinie des Klebebandes 2 von der Walze 1.

Im Folgenden soll das erfindungsgemäße Verfahren anhand eines Beispieles erläutert werden, ohne dieses damit unnötig einschränken zu wollen.

Beispiel

Eine Klebemasse wurde mit 85 g/m$^2$ auf ein Releasepapier beschichtet und in die erfindungsgemäße Anlage gefahren, wobei die Elektronenstrahlvernetzung der Klebemasse auf einer Kühlwalze bei einer eingestellten Dosis von 40 kGy und verschiedenen Beschleunigungsspannungen von 140 bis 200 kV erfolgte.
Die Walze war mit einer leitfähigen sehr glatten polierten Chromschicht ausgerüstet.

Der Verbund Klebemasse/Releaseliner wurde mit Hilfe einer Nadelelektrode (Typ R130A von Firma Eltex), die von einem Hochspannungsgenerator (Typ KNH34/N von Firma Eltex) versorgt wurde, gegen die Walze gepresst und durch den Elektronenstrahl geführt. Die Nadelelektrode wurde bei einer Bahngeschwindigkeit von 50 m/min mit einer negativen Hochspannung von -16,2 kV beaufschlagt. Der Abstand der Nadelspitzen von der Walzenoberfläche, die Position der Elektrode in Bahnlaufrichtung und der Neigungswinkel der Elektrode zur Tangente der Auflegewalze wurden optimiert, bis bei einer transparenten Folie optisch eine gute Benetzung der Walze zu beobachten war. Dabei betrug der Nadelabstand ca. 7 mm von der Walzenoberfläche, die Position der Elektrode war ca. 10 mm in Bahnlaufrichtung hinter der Auflegelinie auf die Walze.

Die benutzte Elektronenstrahlanlage hatte ein zu durchstrahlendes Flächengewicht zwischen Hochvakuum und Produkt von 124 g/m$^2$.

Die Klebemassen entsprachen solchen, wie sie zum Beispiel in der DE 39 42 232 A1 oder der DE 43 13 008 C2 beschrieben worden sind.

Die Bestimmung der Abrollkraft war angelehnt an die AFERA 4013 / DIN E 1944, die Abzugskraft entspricht der Trennkraft nach FT M3 von Finat.

Zum Vergleich wurde obiges Beispiel durchgeführt, ohne dass der Verbund Klebemasse/Releaseliner gegen die Walze gepresst wurde.

Tabelle 1 Gemessene Abrollkräfte bei 40 kGy und verschiedenen Beschleunigungsspannungen

|  | ohne Vernetzung | 140 kV | 160 kV | 180 kV | 200 kV |
|---|---|---|---|---|---|
| ohne Anpressen | 10 cN/cm | 20 cN/cm | 31 cN/cm | 37 cN/cm | 46 cN/cm |
| mit Anpressen | 11 cN/cm | 12 cN/cm | 14 cN/cm | 17 cN/cm | 19 cN/cm |

Wie aus der Tabelle 1 hervorgeht, reduziert das erfindungsgemäße Auspressen der Luft zwischen dem Verbund Klebemasse/Releaseliner und der Walze die Abrollkräfte teilweise um mehr als 50 % aufgrund der deutlich verminderten Schädigung der Releaseschicht durch den Elektronenstrahl.

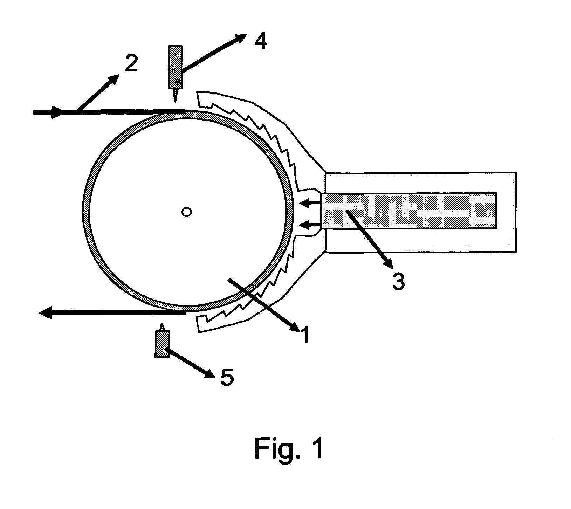

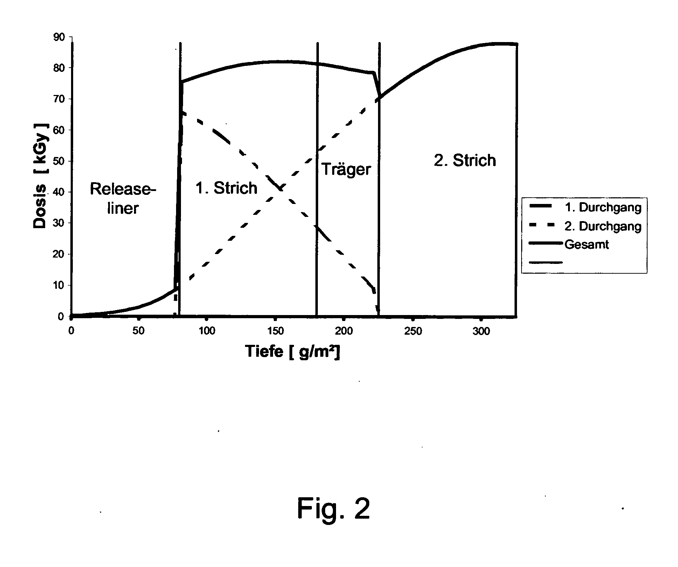

**Patentansprüche**

1.  Verfahren zur Vernetzung einer Klebemasse, die sich auf einem beidseitig mit antiadhäsiven Silikonschichten ausgerüsteten Träger befindet, mittels Elektronenstrahlen, wobei der Träger mit der Klebemasse in eine Bestrahlungsvorrichtung geführt wird, in der die Klebemasse einseitig mit Elektronenstrahlen von einem Elektronenstrahler auf der offenen, nicht eingedeckten Seite beaufschlagt wird, wobei der mit der Klebemasse beaufschlagte Träger in direktem Kontakt auf einer Walze liegend durch die Elektronenstrahlen geführt wird, wobei über der Aufgabelinie des Trägers mit der Klebemasse auf die Walze eine elektrostatische Aufladungsvorrichtung und über der Abzugslinie des Trägers mit der Klebemasse von der Walze eine elektrostatische Entladungsvorrichtung vorhanden ist.

2.  Verfahren zur Vernetzung einer Klebemasse, die sich auf einem beidseitig mit antiadhäsiven Silikonschichten ausgerüsteten Träger befindet, mittels Elektronenstrahlen, wobei der Träger mit der Klebemasse in eine Bestrahlungsvorrichtung geführt wird, in der die Klebemasse einseitig mit Elektronenstrahlen von einem Elektronenstrahler auf der offenen, nicht eingedeckten Seite beaufschlagt wird, wobei der mit der Klebemasse beaufschlagte Träger in direktem Kontakt auf einer Walze liegend durch die Elektronenstrahlen geführt wird, wobei über der Aufgabelinie des Trägers mit der Klebemasse auf die Walze eine Lüftdüse vorhanden ist.

3. Verfahren nach den Ansprüchen 1 oder 2, **dadurch gekennzeichnet, dass** die Walze eine Kühlwalze ist und/oder aus einer elektrisch leitfähigen Walze besteht.

4. Verfahren nach zumindest einem der Ansprüche 1 bis 3, **dadurch gekennzeichnet, dass** die Mantelseite der Walze mit einem elektrisch isolierenden Material beschichtet ist.

5. Verfahren nach zumindest einem der vorhergehenden Ansprüche, **dadurch gekennzeichnet, dass** auf die rotierende Walze mittels eines Fluidauftragswerks ein Fluidfilm aufgetragen wird.

6. Verfahren nach zumindest einem der vorhergehenden Ansprüche, **dadurch gekennzeichnet, dass** der Abstand zwischen Elektrode und der Walze zwischen 2 und 30 mm beträgt.

7. Verfahren nach zumindest einem der vorhergehenden Ansprüche, **dadurch gekennzeichnet, dass** positive oder negative Hochspannungen zwischen 5 und 30 kV an die Aufladeelektrode angelegt werden.

8. Verfahren nach zumindest einem der vorhergehenden Ansprüche, **dadurch gekennzeichnet, dass** die resultierenden Strahlendosen in den Klebemassen bis zu 80 kGy betragen und ES-Beschleunigungsspannungen von 40 bis 500 kV gewählt werden.

9. Verfahren nach zumindest einem der vorhergehenden Ansprüche, **dadurch gekennzeichnet, dass** die Bahngeschwindigkeit, mit der der Träger samt Klebemasse in die Bestrahlungsvorrichtung geführt wird, über 100 m/min beträgt.

10. Verfahren nach zumindest einem der vorhergehenden Ansprüche, **dadurch gekennzeichnet, dass** als Klebmassen eingesetzt werden Acrylate und Kautschuke aus Lösung, aus Dispersion oder Hotmelt-Klebemassen.

11. Verfahren nach zumindest einem der vorhergehenden Ansprüche, **dadurch gekennzeichnet, dass** die Klebmassen gefüllt, gefärbt und/oder geschäumt sind.

**Claims**

1. Process for electron-beam crosslinking of an adhesive which is located on a carrier furnished on both sides with anti-adhesive silicone layers, the carrier with the adhesive being guided into an irradiation means, in which the adhesive is bombarded on one side with electron beams from an electron-beam source on the open, unlined side, the carrier provided with the adhesive being guided in direct contact, lying on a roll, through the electron beams, there being an electrostatic charging means, over the feedline of the carrier with the adhesive to the roll, and an electrostatic discharge means, over the take-off line of the carrier with the adhesive from the roll.

2. Process for electron-beam crosslinking of an adhesive which is located on a carrier furnished on both sides with anti-adhesive silicone layers, the carrier with the adhesive being guided into an irradiation means, in which the adhesive is bombarded on one side with electron beams from an electron-beam source on the open, unlined side, the carrier provided with the adhesive being guided in direct contact, lying on a roll, through the electron beams, there being an air nozzle over the feedline of the carrier with the adhesive to the roll.

3. Process according to Claim 1 or 2, **characterized in that** the roll is a chill roll and/or is composed of an electrically conductive roll.

4. Process according to at least one of Claims 1 to 3, **characterized in that** the outer face of the roll is coated with an electrically insulating material.

5. Process according to at least one of the preceding claims, **characterized in that** a fluid film is applied by means of a fluid applicator to the rotating roll.

6. Process according to at least one of the preceding claims, **characterized in that** the distance between the electrode and the roll is between 2 and 30 mm,.

7. Process according to at least one of the preceding claims, **characterized in that** positive or negative high voltages of between 5 and 30 kV are applied to the charging electrode.

8. Process according to at least one of the preceding claims, **characterized in that** the resulting beam doses in the adhesives are up to 80 kGy and EB acceleration voltages of from 40 to 500 kV are chosen.

9. Process according to at least one of the preceding claims, **characterized in that** the belt speed with which the carrier together with adhesive is guided into the irradiation means is more than 100 m/min.

10. Process according to at least one of the preceding claims, **characterized in that** adhesives employed are acrylates and rubbers from solution or from dispersion, or hotmelt adhesives.

11. Process according to at least one of the preceding claims, **characterized in that** the adhesives have been filled, colored and/or foamed.

**Revendications**

1. Procédé de réticulation d'une masse adhésive, qui se trouve sur un support apprêté sur les deux faces de couches de silicone antiadhésives, au moyen de rayons électroniques, le support avec la masse adhésive étant guidé dans un dispositif d'irradiation, dans lequel la masse adhésive est soumise sur une face à des rayons électroniques d'un émetteur d'électrons sur la face ouverte, non recouverte, le support portant la masse adhésive étant guidé dans les rayons électroniques en étant en contact direct avec un cylindre, un dispositif de charge électrostatique se trouvant au-dessus de la ligne de transfert du support avec la masse adhésive sur le cylindre et un dispositif de décharge électrostatique se trouvant au-dessus de la ligne d'élimination du support avec la masse adhésive du cylindre.

2. Procédé de réticulation d'une masse adhésive, qui se trouve sur un support apprêté sur les deux faces de couches de silicone antiadhésives, au moyen de rayons électroniques, le support avec la masse adhésive étant guidé dans un dispositif d'irradiation, dans lequel la masse adhésive est soumise sur une face à des rayons électroniques d'un émetteur d'électrons sur la face ouverte, non recouverte, le support portant la masse adhésive étant guidé dans les rayons électroniques en étant en contact direct avec un cylindre, une buse d'air se trouvant au-dessus de la ligne de transfert du support avec la masse adhésive sur le cylindre.

3. Procédé selon les revendications 1 ou 2, **caractérisé en ce que** le cylindre est un cylindre de refroidissement et/ou est constitué par un cylindre électriquement conducteur.

4. Procédé selon au moins l'une quelconque des revendications 1 à 3, **caractérisé en ce que** le côté enveloppe du cylindre est revêtu par un matériau électriquement isolant.

5. Procédé selon au moins l'une quelconque des revendications précédentes, **caractérisé en ce qu'**on applique, sur un cylindre en rotation, au moyen d'un dispositif d'application de fluides, un film fluide.

6. Procédé selon au moins l'une quelconque des revendications précédentes, **caractérisé en ce que** la distance entre l'électrode et le cylindre est située entre 2 et 30 mm.

7. Procédé selon au moins l'une quelconque des revendications précédentes, **caractérisé en ce qu'**on applique des hautes tensions positives ou négatives entre 5 et 30 kV sur l'électrode de charge.

8. Procédé selon au moins l'une quelconque des revendications précédentes, **caractérisé en ce que** les doses de rayons obtenues dans les masses adhésives vont jusqu'à 80 kGy, et les tensions d'accélération ES sont choisies de 40 à 500 kV.

9. Procédé selon au moins l'une quelconque des revendications précédentes, **caractérisé en ce que** la vitesse de bande à laquelle le support avec la masse adhésive est guidé dans le dispositif d'irradiation, est supérieure à 100 m/min.

**10.** Procédé selon au moins l'une quelconque des revendications précédentes, **caractérisé en ce qu'**on utilise comme masses adhésives des acrylates et des caoutchoucs à partir d'une solution, d'une dispersion ou de masses adhésives thermofusibles.

**11.** Procédé selon au moins l'une quelconque des revendications précédentes, **caractérisé en ce que** les masses adhésives sont chargées, colorées et/ou moussées.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0453254 A
- DE 19905934 A1
- DE 19846901 A1
- DE 19846902 A1
- DE 10157881 A1
- DE 10014563 A1
- DE 4313008 C2
- EP 0578151 A
- DE 3942232 A1

**In der Beschreibung aufgeführte Nicht-Patentliteratur**

- Ullmann's Encyclopedia of Industrial Chemistry. Electronic Release. Wiley-VCH, 2000
- Coating Equipment. **DONATAS SATAS.** Handbook of Pressure Sensitive Adhesive Technology. 767-808
- *Handbook of Pressure Sensitive Adhesive Technology,* 809-874